Europäisches Patentamt

European Patent Office

Office européen des brevets

(11) Numéro de publication: **0 196 990 B1**

# FASCICULE DE BREVET EUROPEEN

(45) Date de publication de fascicule du brevet:
**02.05.91**

(51) Int. Cl.⁵: **A61F 5/01**

(21) Numéro de dépôt: **86440022.1**

(22) Date de dépôt: **20.03.86**

(54) **Dispositif à réduction dimensionnelle préférentiellement dirigée, actionné par dépression.**

(30) Priorité: **21.03.85 FR 8504353**
**21.03.85 FR 8504354**

(43) Date de publication de la demande:
**08.10.86 Bulletin 86/41**

(45) Mention de la délivrance du brevet:
**02.05.91 Bulletin 91/18**

(84) Etats contractants désignés:
**AT BE CH DE GB IT LI LU NL SE**

(56) Documents cités:
**NL-A- 7 016 838**
**NL-A- 7 101 392**
**US-A- 3 762 404**
**US-A- 3 968 620**

(73) Titulaire: **Loeb, Jean**
**18, rue d'Upsal**
**F-67000 Strasbourg(FR)**

(72) Inventeur: **Loeb, Jean**
**18, rue d'Upsal**
**F-67000 Strasbourg(FR)**

(74) Mandataire: **Nuss, Pierre**
**10, rue Jacques Kablé**
**F-67000 Strasbourg(FR)**

Rank Xerox (UK) Business Services

Description

La présente invention concerne le domaine de la réalisation de dispositifs d'appui devant être adaptés à des conditions morphologiques ou physiologiques données, et a pour objet un dispositif à réduction dimensionnelle préférentiellement dirigée, actionné par dépression.

Actuellement, la réalisation de dispositifs d'appui ou de support sous forme de sièges ou de fauteuils ergonomiques, en particulier pour des buts médicaux, ou utilisables dans le domaine des transports, ou encore sous forme de tables ou de lits en plusieurs éléments mobiles et orientables entre eux est généralement effectuée par prévision aux endroits de changement d'orientation d'éléments en forme de charnières pouvant être bloquées au moyen de dispositifs de serrage appropriés.

Ces dispositifs d'appui ou de support existant sont généralement construits suivant une dimension standard et ne peuvent donc s'adapter à la morphologie d'un utilisateur que de manière plus ou moins satisfaisante suivant que ledit utilisateur présente des mensurations plus ou moins proches de celles prises en compte pour la fabrication du dispositif.

L'invention concerne également le domaine de la protection contre l'effet des accélérations, notamment dans des avions de combat, et a pour objet un dispositif de serrage par dépression, en particulier pour vêtement à usage aéronautique communément appelé vêtement "anti-G".

Actuellement, les performances des avions de combat, qui permettent l'exécution de missions de plus en plus difficiles, ont des conséquences néfastes sur le pilote, du fait que les accélérations deviennent de plus en plus importantes. En effet, ces accélérations influent sur l'état de la circulation et risquent de désarmocer le flux sanguin, pour le transformer en un effet de stockage du sang dans les vaisseaux sanguins, en particulier des membres inférieurs et de l'abdomen.

Un tel effet de stockage a pour conséquence quasi-immédiate un effet de voile noir suivi d'une syncope et donc d'une perte de contrôle de l'avion pouvant entraîner sa perte et celle du pilote.

Pour obvier à cet inconvénient, il a été proposé, dans un premier temps, des ceintures abdominales très ajustées, mais dont le résultat était peu concluant, et des combinaisons "anti-G" remplies d'eau et entourant le tronc et les membres inférieurs, l'eau exerçant une contre-pression égale à la pression hydrostatique lors des accélérations. Ces combinaisons étaient cependant inconfortables et peu pratiques d'utilisation.

Les combinaisons "anti-G" existant actuellement fonctionnent suivant le principe d'un gonflage d'une enveloppe renfermée dans une combinaison entourant les membres inférieurs et le tronc, cette pression de gonflage étant régulée proportionnellement à l'accélération au moyen d'une valve "anti-G". Ces nouvelles combinaisons sont généralement constituées par un certain nombre de vessies pneumatiques placées sur les endroits sensibles et gonflées par de l'air comprimé, ou autre.

Ces combinaisons connues offrent un confort et une sécurité acceptables contre les effets des accélérations, mais sont toutefois exposées à un risque d'endommagement des vessies dû à une surpression de gonflage entraînant automatiquement un dégonflage des autres vessies ou à un mauvais fonctionnement d'une valve. En outre, ces combinaisons nécessitent pour leur actionnement des volumes de fluide de gonflage conséquents, d'où des temps de réponse élevés.

On connaît, par ailleurs, par NL-A-7 016 838 un dispositif d'immobilisation du type attelle présentant des corps longitudinaux creux et souples renfermant des matériaux granulaires et pouvant être mis sous dépression. Dans un tel dispositif, une rétraction est réalisée dans toutes les directions, même si les éléments granulaires et les chambres sont longiformes. En outre, un tel mode de réalisation ne permet pas l'obtention d'une direction de rétraction préférentielle.

La présente invention a pour but de pallier ces inconvénients par le développement d'une autre technologie.

Elle a, en effet, pour objet un dispositif essentiellement constitué par au moins une enveloppe étanche munie d'une buse de raccordement à un organe déprimogène, présentant au moins une direction de réduction dimensionnelle préférée, ce dispositif étant actionné par dépression, et un corps souple rétractable étant intégré dans la ou les enveloppes et présentant au moins une direction de rétraction préférentielle, une dépression dans la ou les enveloppes ayant pour effet un fronçage de ses parois perpendiculairement à la direction de rétraction, caractérisé en ce que le corps est constitué par des éléments en matières souples à propriétés d'écrasement différentes, ces éléments étant assemblés entre eux le long de leurs bords longitudinaux avec disposition alternée et les éléments de moindre écrasement formant des raidisseurs longitudinaux.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue partielle en perspective d'un dispositif conforme à l'invention ;

la figure 2 est une vue en coupe du dispositif en position de service ;

les figures 3 à 7 représentent des variantes de réalisation du dispositif suivant les figures 1 et 2 ;

la figure 8 est une vue en perspective d'une autre variante de réalisation de l'invention ;

la figure 9 est une vue analogue à celle de la figure 8 d'une autre variante de réalisation de l'invention ;

les figures 10 et 11 sont des vues respectivement en coupe et en plan de deux autres variantes de réalisation de l'invention, et

la figure 12 est une vue en perspective d'une adaptation du dispositif suivant les figures 1 à 7 sous forme d'une combinaison "anti-G".

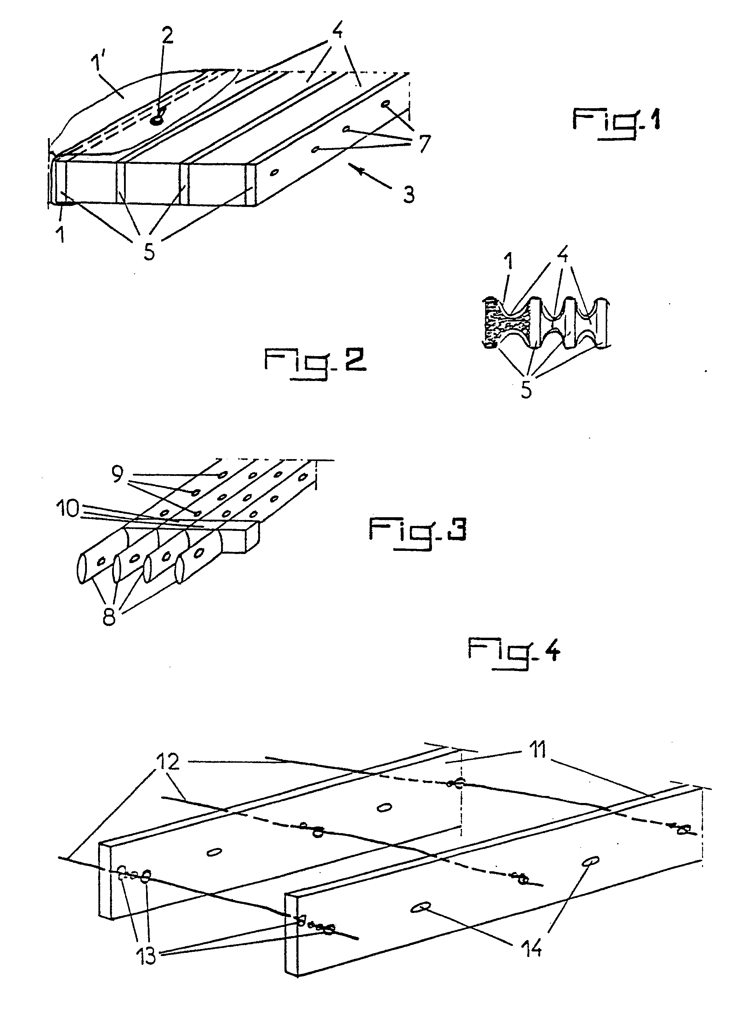

Conformément à l'invention, et comme le montre plus particulièrement, à titre d'exemple, la figure 1 des dessins annexés, le dispositif présente au moins une direction de rétraction préférentielle et est actionné par dépression. Ce dispositif est constitué par au moins une enveloppe étanche 1, 1' munie d'une buse 2 de raccordement à un organe déprimogène, et par un corps souple rétractable 3 intégré dans ladite enveloppe 1 et présentant au moins une direction de rétraction préférentielle, une dépression dans l'enveloppe 1 ou les enveloppes 1 ayant pour effet un fronçage de ses parois perpendiculairement à ladite direction de rétraction (figures 1 et 2).

Dans l'exemple de réalisation du dispositif représenté aux figures 1 et 2, la direction de rétraction est perpendiculaire à l'axe longitudinal de l'enveloppe 1 et du corps 3 qui est constitué par des éléments 4 et 5 en matières souples à propriétés d'écrasement différentes, ces éléments étant assemblés entre eux le long de leurs bords longitudinaux avec disposition alternée et les éléments 5 de moindre écrasement formant des raidisseurs longitudinaux. Ce mode de réalisation du corps 3 permet, par une forte compaction des éléments 4, d'obtenir un fronçage important des parois de l'enveloppe 1 (figure 2) à la manière d'un soufflet d'accordéon, ces parois épousant intimement les contours des éléments 4 compactés par dépression. Ainsi, il est obtenu une rétraction dimensionnelle qui est proportionnelle à la valeur de la différence de pression engendrée.

Les éléments 4 et 5 peuvent être constitués en mousses de densités ou de compacités différentes, à alvéoles étanches ou non. Dans ces mousses, le gaz enfermé dans les alvéoles joue un rôle d'annulation de l'hystérésis ou de l'effet de fatigue de la matière sous contrainte et favorise le retour en position de repos du corps 3 par un effet de ressort. Les éléments 5, qui forment des raidisseurs longitudinaux, empêchent, pour leur part, toute rétraction longitudinale du corps 3 sous l'effet de la dépression, tout en conservant une souplesse suffisante.

La longueur de fronçage des parois de l'enveloppe 1 est indépendante des dimensions du corps 3, en particulier de son épaisseur et de sa hauteur, de sorte que ledit corps 3, et donc l'ensemble du dispositif, peut être fin et léger, seule la peau formée par la paroi de l'enveloppe 1 fournissant le travail de serrage, les éléments 4 et 5 du corps 3 ne servant qu'à plisser ou froncer cette peau.

Pour favoriser la rapidité de l'action de décompression, les éléments 4 et 5 sont avantageusement munis de perçages 7 les traversant transversalement à intervalles réguliers, ou sont en mousse à alvéoles ouverts. Ces perçages 7 créent une liaison entre les différents éléments 3 et 4 et permettent ainsi une meilleure aspiration de l'air s'y trouvant, de sorte que la compaction peut s'effectuer de manière très efficace (figure 2).

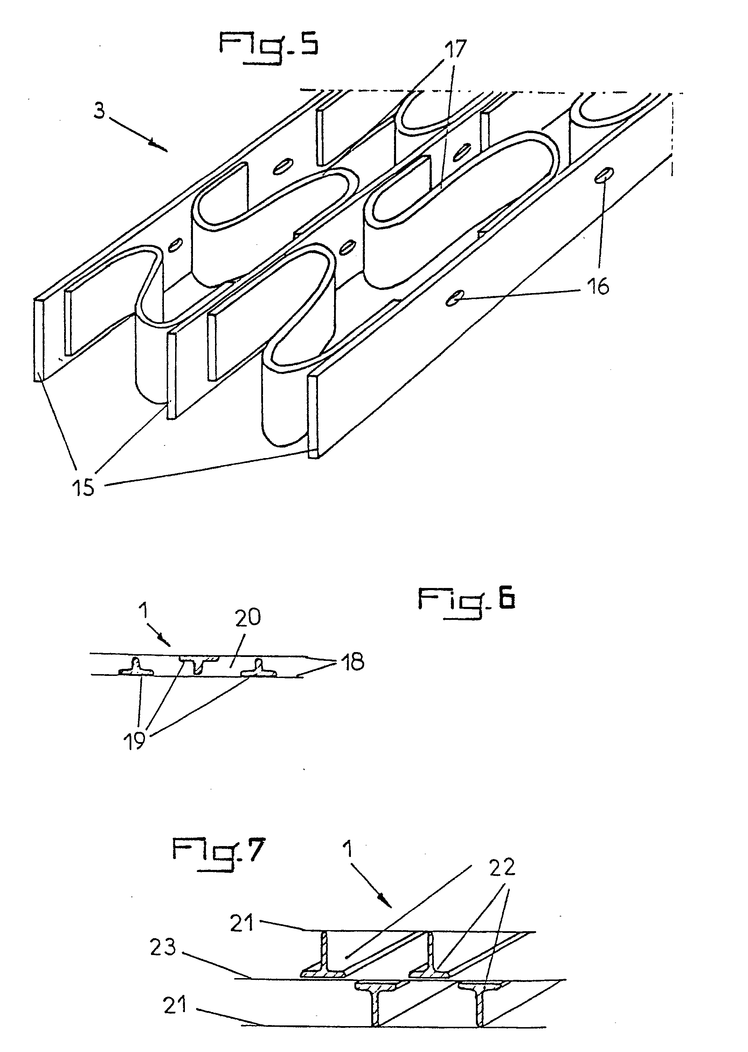

La figure 3 représente une variante de réalisation du corps 3, dans laquelle ce dernier est constitué par des lamelles 8 à consistance plus forte, en caoutchouc, en matière synthétique, ou autre, munies de trous de communication 9 et maintenues à écartement en position de repos par des plots de mousse synthétique 10 à consistance faible. Dans ce mode de réalisation, les lamelles 8 assurent un maintien longitudinal de l'enveloppe 1, la rétraction étant dirigée transversalement auxdites lamelles 8 du fait de la faible consistance des plots 10.

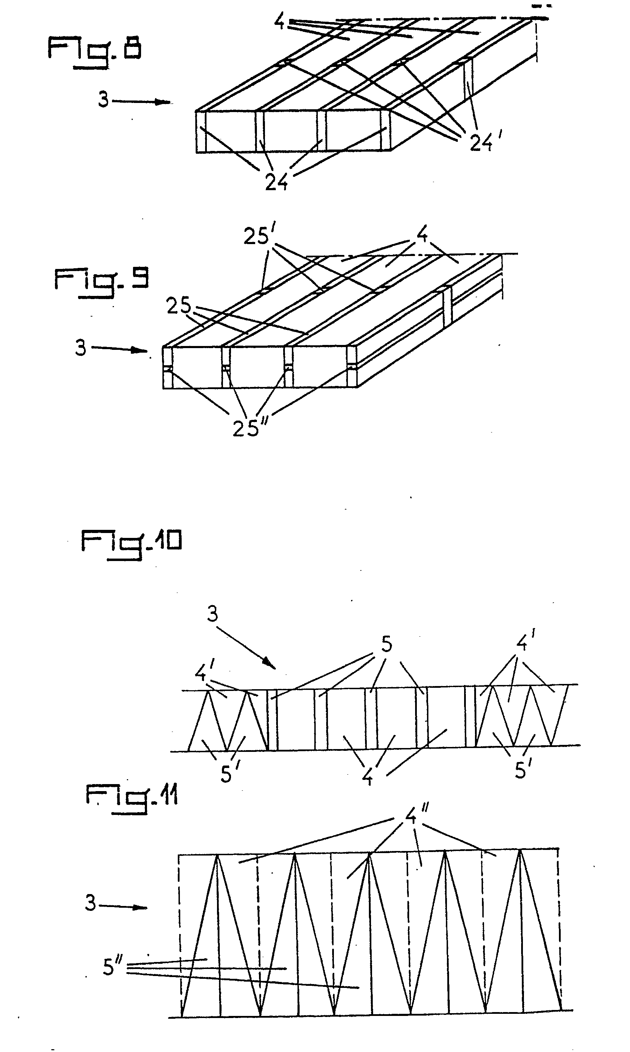

La figure 4 représente une variante de réalisation du corps suivant la figure 3, dans laquelle des lamelles de section rectangulaire 11 formées dans un matériau à consistance relativement forte sont reliées entre elles à espacement régulier au moyen de fils souples 12, bloqués sur chaque lamelle 11 au moyen de noeuds 13 ou autres, l'ensemble lamelles 11 - fils souples 12 formant le corps souple rétractable, et les lamelles 11 étant munies, à intervalles réguliers, de trous 14. Ce mode de réalisation permet une simplification du corps 3 introduit dans une ou plusieurs enveloppes 1 ou 1', la mise sous dépression de l'espace intérieur de ces dernières permettant un fronçage des parois entre les lamelles 11 qui évitent un rétrécissement suivant leur axe longitudinal.

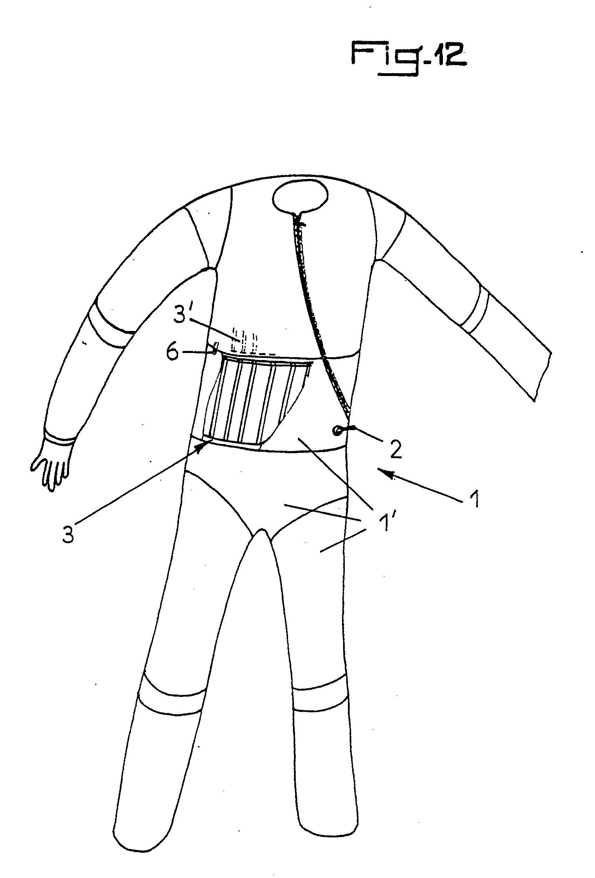

Suivant une autre variante de réalisation de l'invention, le corps 3 est constitué par des bandes de caoutchouc de section rectangulaire 15 (figure 5) munies de trous de communication 16 et assemblées entre elles à intervalles réguliers au moyen d'éléments d'écartement élastiques 17 en S, en U, ou autre, également réalisés en caoutchouc. Les bandes 15 assurent la non rétraction du corps 3, qui s'effectue suivant une direction préférentielle perpendiculaire correspondant à un écrasement des éléments 17, dont l'élasticité assure le retour en position après arrêt de la mise sous dépression.

Selon une autre caractéristique de l'invention, le corps 3 est avantageusement collé, au moins par l'une de ses faces, sur la paroi correspondante de l'enveloppe 1, ou des enveloppes 1', soit à l'état détendu, soit avec une tension préalable. Un tel collage permet de garantir, lors de la mise en dépression du dispositif, que l'enveloppe 1, ou les enveloppes 1', suit la rétraction du corps 3 et que les parois d'enveloppe épousent tous les aspérités, détours et pliures dudit corps 3 pour aboutir à une réduction de longueur desdites parois correspondant à un fronçage important.

La figure 6 représente une variante de réalisation de l'invention, dans laquelle les parois 18 de l'enveloppe 1 sont munies, alternativement et à intervalles réguliers, par collage, ou autre, de profilés souples longitudinaux 19 s'étendant perpendiculairement au sens de rétraction préférentiel. Dans ce cas, le corps 3 est réduit aux seuls profilés souples 19 et aux espaces d'air 20 compris entre ces profilés, de sorte qu'une mise en dépression de l'enveloppe 1 tend à réduire les espaces 20, rapprochant les profilés 19 et entraînant un fronçage des parois 18.

Selon une autre variante de réalisation de l'invention, représentée à la figure 7, chaque paroi 21 de l'enveloppe 1 est munie, par collage ou autre, à intervalles réguliers et alternativement, de profilés souples longitudinaux 22, dont les bords libres s'appuient sur une toile intermédiaire 23 non étirable ou faiblement étirable. Ainsi, une mise sous dépression de l'enveloppe 1 tend à rapprocher les bords libres des profilés 22 des parois opposées en entraînant la toile 23 provoquant un fronçage de cette dernière, suivi d'un fronçage des parois 21 de l'enveloppe 1.

Conformément à une autre caractéristique de l'invention, il est également possible de remplir les espaces entre les éléments raidisseurs longitudinaux souples avec des microbilles compressibles légères.

Selon une autre caractéristique de l'invention, et comme le montre la figure 8, le dispositif présente deux directions de rétraction préférentielles, à savoir suivant une direction perpendiculaire au sens longitudinal des éléments 5 constituant le corps 3, et en direction du sens longitudinal. La deuxième direction de rétraction préférentielle est donc perpendiculaire à la première, et le corps 3 comporte des éléments 24 de plus forte compacité munis à intervalles réguliers de portions 24' de moindre compacité, la compacité de ces portions 24' pouvant être supérieure ou inférieure à celle des éléments 4 du corps 3, en fonction de la direction de rétraction prioritaire choisie. Grâce à un tel mode de réalisation, il est possible de réaliser une réduction dimensionnelle d'un dispositif suivant deux directions perpendiculaires, la composition des éléments constitutifs du corps pouvant être choisie pour obtenir un ordre prioritaire de rétraction ou une rétraction simultanée dans les deux directions.

Conformément à une autre caractéristique de l'invention, et comme le montre la figure 9, le dispositif présente trois directions de rétraction, à savoir suivant des axes orthogonaux, les éléments 25 de plus forte compacité présentant eux-mêmes deux directions de rétraction dans leur sens longitudinal et dans leur épaisseur. A cet effet, chaque élément 25 est muni à intervalles réguliers, dans le sens longitudinal, de portions 25' de moindre compacité, et dans le sens de son épaisseur, d'au moins une couche intermédiaire 25" de moindre compacité, la compacité des portions 25' et couche 25" pouvant être la même ou différente, et pouvant être supérieure ou inférieure à celle des éléments 4. Un tel mode de réalisation permet de prédéterminer une succession prioritaire des directions de rétraction par le simple choix de la compacité des matériaux mis en oeuvre.

Selon une autre caractéristique de l'invention, la troisième direction de rétraction peut être obtenue par prévision d'un affaiblissement de section des éléments de plus forte compacité au niveau d'une arête longitudinale.

La figure 10 représente une autre variante de réalisation de l'invention, dans laquelle, avantageusement, un ou plusieurs éléments 5' du corps 3 présentent une section triangulaire et les éléments 4' de moindre compacité présentent des sections complémentaires. Un tel mode de réalisation permet, lors de la mise en dépression, un pliage du corps le long des arêtes supérieures des éléments 5' et donc un mouvement de rotation d'une partie du dispositif par rapport à la partie constituée par les éléments 5 de section rectangulaire ou carrée. Suivant le mode de réalisation de la figure 10, il est ainsi concevable de réaliser un repliage ou un enroulage plus ou moins important du corps 3 en fonction du nombre et de la disposition des éléments 4' et 5'. Il est donc possible, par une disposition judicieuse de ces éléments 4' et 5' de réaliser, par exemple, un surmoulage d'une pièce ou d'un membre, ou une adaptation à un contour.

Enfin, la figure 11 représente une autre variante de réalisation de l'invention, dans laquelle des éléments 5" de plus forte compacité et des éléments 4" de moindre compacité présentent une forme de tétraèdre et sont disposés dans une enveloppe tête-bêche. Ce mode de réalisation permet un pliage du dispositif le long d'une arête des éléments 5" et ainsi également une adaptation du dispositif aux contours d'un élément donné.

Selon une autre caractéristique de l'invention, le dispositif est avantageusement muni, perpendiculairement à sa direction de rétraction principale, à intervalles réguliers, d'éléments rigides (non représentés) permettant un maintien sans déformation. Un tel mode de réalisation est particulièrement intéressant dans le cas d'application à un lit ou un brancard.

Grâce au dispositif conforme à l'invention, il est possible de réaliser, soit des supports à appui variable en position et en intensité du type lit anti-escarre, par rétraction dimensionnelle dans une ou plusieurs directions, soit des supports du type siège ou fauteuil ou table d'opération présentant plusieurs parties orientables entre elles, par rétraction suivant plusieurs directions, ou par prévision d'éléments rétractables de forme adaptée. En outre, l'invention permet également d'adapter un support exactement à un contour prédéterminé, soit comme utilisation sur un siège, en particulier de véhicule automobile ou autre, soit encore sous forme d'un élément enveloppant tel qu'une attelle, ou autre.

La figure 12 représente une autre variante de réalisation de l'invention sous forme d'un dispositif de serrage agissant par dépression, en particulier pour vêtement "anti-G", et réalisé par mise en oeuvre des dispositifs suivant les figures 1 à 8.

Ce dispositif de serrage est essentiellement constitué par au moins une enveloppe étanche 1, cette enveloppe pouvant comporter plusieurs enveloppes indépendantes 1' reliées entre elles par des conduites de liaison intégrées 6, l'enveloppe 1 ou les enveloppes indépendantes 1' étant munies d'au moins un raccord 2 à un organe déprimogène, ou autre, et caractérisé en ce qu'il agit par dépression, en ce qu'un corps souple rétractable 3, 3' est intégré dans la ou lesdites enveloppes 1, 1' , une dépression dans la ou les enveloppes ayant pour effet une rétraction de leurs parois provoquant un serrage des parties du corps prises dans la ou les enveloppes 1, 1' et en ce que le corps souple rétractable 3, 3' présente avantageusement une direction de rétraction préférentielle perpendiculaire à l'axe longitudinal de l'enveloppe 1 ou des enveloppes 1' .

La constitution du dispositif en plusieurs enveloppes 1' indépendantes logeant chacune un corps 3' formé par des éléments 4 et 5 de compacités différentes permet une meilleure répartition de l'effet recherché et une application optimale de la force de serrage en chaque endroit, ainsi qu'un serrage de la partie du corps correspondante d'une intensité proportionnelle à la valeur de la différence de pression engendrée.

L'organe déprimogène à relier au raccord 2 peut être, soit un organe embarqué déclenché par un appareil de mesure d'accélération à une valeur prédéterminée, soit simplement un raccord monté dans une zone de dépression de l'avion et reliée au raccord 2 par l'intermédiaire d'une valve commandée, ou à une réserve de vide, dont le volume est fonction de l'épaisseur de l'habit.

Dans le cas d'utilisation d'un tissu ou d'un nontissé pour former le corps 3, ledit tissu ou non-tissé est disposé dans l'enveloppe 1 avec une légère précontrainte créant une tension initiale des parois de ladite enveloppe 1 de manière à appliquer celle-ci intimement sur l'usager. La mise en dépression de l'enveloppe 1 ou des enveloppes 1' aura alors automatiquement et très rapidement pour conséquence un serrage par rétraction des parois de l'enveloppe 1 ou des enveloppes 1' .

En cas de remplissage des espaces entre les éléments raidisseurs longitudinaux souples avec des microbilles compressibles légères, il est possible d'obtenir un vêtement qui, non seulement, assure un serrage lors des accélérations brutales, mais rigidifie également les membres et autres parties du corps lors de ces accélérations, en particulier lors d'une éjection.

Dans la figure 12 des dessins annexés, le vêtement "anti-G" est représenté sous forme d'une combinaison de vol à fermeture par glissière, ou autre.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention tel que définit par les revendications.

## Revendications

1. Dispositif, essentiellement constitué par au moins une enveloppe étanche (1, 1') munie d'une buse (2) de raccordement à un organe déprimogène, présentant au moins une direction de réduction dimensionnelle préférée, ce dispositif étant actionné par dépression, et un corps souple rétractable (3) étant intégré dans la ou les enveloppes (1, 1'), et présentant au moins une direction de rétraction préférentielle, une dépression dans l'enveloppe (1) ou les enveloppes (1') ayant pour effet un fronçage de ses parois perpendiculairement à la direction de rétraction, caractérisé en ce que le corps (3) est constitué par des éléments (4 et 5) en matières souples à propriétés d'écrasement différentes, ces éléments étant assemblés entre eux le long de leurs bords longitudinaux avec disposition alternée et les éléments (5) de moindre écrasement formant des raidisseurs longitudinaux.

2. Dispositif, suivant la revendication 1, caractérisé en ce que les éléments (4 et 5) sont constitués en mousses de densités ou de compacités différentes, à alvéoles étanches ou non.

3. Dispositif, suivant l'une quelconque des revendications 1 et 2, caractérisé en ce que, pour favoriser la rapidité de l'action de décompression, les éléments (4 et 5) sont avantageusement munis de perçages (7) les traversant transversalement à intervalles réguliers, ou sont en mousse à alvéoles ouverts.

4. Dispositif, suivant la revendication 1, caractérisé en ce que le corps (3) est constitué par des lamelles (8) à consistance plus forte, en caoutchouc, en matière synthétique, ou autre, munies de trous de communication (9) et maintenues à écartement en position de repos par des plots de mousse synthétique (10) à consistance faible, ces plots (10) permettant un écrasement du corps (1), suivant des lignes longitudinales et les lamelles (8) formant les raidisseurs longitudinaux.

5. Dispositif, suivant la revendication 1, caractérisé en ce que le corps (3) est constitué par des lamelles de section rectangulaire (11) formées dans un matériau à consistance relativement forte reliées entre elles à espacement régulier au moyen de fils souples (12), bloqués sur chaque lamelle (11) au moyen de noeuds (13) ou autres, l'ensemble lamelles (11) - fils souples (12) formant le corps souple rétractable, et les lamelles (11) étant munies, à intervalles réguliers, de trous (14) et formant des raidisseurs longitudinaux.

6. Dispositif, suivant la revendication 1, caractérisé en ce que le corps (3) est constitué par des bandes de caoutchouc de section rectangulaire (15) munies de trous de communication (16) et assemblées entre elles à intervalles réguliers au moyen d'éléments d'écartement élastiques (17) en S, en U, ou autre, également réalisés en caoutchouc, les bandes (15) formant des raidisseurs longitudinaux et les éléments d'écartement (17) formant les éléments à moindre compacité.

7. Dispositif, suivant l'une quelconque des revendications 1 à 6, caractérisé en ce que le corps (3) est collé, au moins par l'une de ses faces, sur la paroi correspondante de l'enveloppe (1) ou des enveloppes (1'), soit à l'état détendu, soit avec une tension préalable.

8. Dispositif, suivant la revendication 1, caractérisé en ce que le corps (3) est formé directement sur les parois (18) de l'enveloppe (1) qui sont munies, alternativement et à intervalles réguliers, par collage ou autre, de profilés souples longitudinaux (19) s'étendant perpendiculairement au sens de rétraction préférentiel et formant des raidisseurs longitudinaux.

9. Dispositif, suivant la revendication 1, caractérisé en ce que le corps (3) est constitué par des profilés souples longitudinaux (22), dont les bords libres s'appuient sur une toile intermédiaire (23) non étirable ou faiblement étirable et qui sont fixés sur chaque paroi (21) de l'enveloppe (1) par collage ou autre, à intervalles réguliers et alternativement, cesdits profilés (22) formant des raidisseurs longitudinaux.

10. Dispositif, suivant l'une quelconque des revendications 4 à 9, caractérisé en ce que les espaces entre les éléments raidisseurs longitudinaux sont remplis avec des microbilles compressibles légères.

11. Dispositif, suivant la revendication 1, caractérisé en ce qu'il présente deux directions de rétraction préférentielles, à savoir suivant une direction perpendiculaire au sens longitudinal des éléments (5) constituant le corps (3), et en direction du sens longitudinal.

12. Dispositif, suivant la revendication 1, caractérisé en ce que le corps (3) comporte des éléments (24) de plus forte compacité munis à intervalles réguliers de portions (24') de moindre compacité, la compacité de ces portions (24') pouvant être supérieure ou inférieure à celle des éléments (4) du corps (3), en fonction de la direction de rétraction prioritaire choisie.

13. Dispositif, suivant la revendication 1, caractérisé en ce qu'il présente trois directions de rétraction, à savoir suivant des axes orthogonaux, les éléments (25) de plus forte compacité présentant eux-mêmes deux directions de rétraction dans leur sens longitudinal et dans leur épaisseur.

14. Dispositif, suivant la revendication 13, caractérisé en ce que chaque élément (25) est muni à intervalles réguliers, dans le sens longitudinal, de portions (25') de moindre compacité, et dans le sens de son épaisseur, d'au moins une couche intermédiaire (25") de moindre compacité, la compacité des portions (25') et couche (25") pouvant être la même ou différente, et pouvant être supérieure ou inférieure à celle des éléments (4).

15. Dispositif, suivant la revendication 13, caractérisé en ce que la troisième direction de rétraction est obtenue par prévision d'un affaiblissement de section des éléments de plus forte compacité au niveau d'une arête longitudinale.

16. Dispositif, suivant l'une quelconque des revendications 1 à 3 et 11 à 13, caractérisé en ce qu'un ou plusieurs éléments (5') du corps (3) présentent une section triangulaire et les éléments (4') de moindre compacité présentent des sections complémentaires.

17. Dispositif, suivant l'une quelconque des revendications 12 à 15, caractérisé en ce que des éléments (5") de plus forte compacité et des éléments (4") de moindre compacité présentent une forme de tétraèdre et sont disposés dans une enveloppe tête-bêche.

18. Dispositif, suivant l'une quelconque des revendications 1 à 17, caractérisé en ce qu'il est avantageusement muni, perpendiculairement à sa direction de rétraction principale, à intervalles réguliers, d'éléments rigides permettant un maintien sans déformation.

19. Dispositif de serrage, en particulier pour vêtement "anti-G", comprenant le dispositif, suivant l'une quelconque des revendications 1 à 10, essentiellement constitué par au moins une enveloppe étanche (1), cette enveloppe pouvant comporter plusieurs enveloppes indépendantes (1') reliées entre elles par des conduites de liaison intégrées (6), l'enveloppe (1) ou les enveloppes indépendantes (1') étant munies d'au moins un raccord (2) à un organe déprimogène, ou autre, caractérisé en ce qu'il agit par dépression en ce qu'un corps souple rétractable (3, 3') est intégré dans la ou lesdites enveloppes (1, 1'), une dépression dans la ou les enveloppes ayant pour effet une rétraction de leurs parois provoquant un serrage des parties du corps prises dans la ou les enveloppes (1, 1') et en ce que le corps souple rétractable (3, 3') présente avantageusement une direction de rétraction préférentielle perpendiculaire à l'axe longitudinal de l'enveloppe (1) ou des enveloppes (1').

**Claims**

1. Device, essentially consisting of at least one sealed casing (1, 1') equipped with a nozzle (2) for connection to a deflating member, having at least one preferred direction of size reduction, this device being actuated by low pressure, and a retractable flexible body (3) being integrated in the casing or casings (1, 1') and having at least one preferential direction of retraction, a low pressure in the casing (1) or the casings (1') resulting in the collapse of its walls perpendicularly to the direction of retraction, characterised in that the body (3) consists of elements (4 and 5) of flexible materials having different crushing properties, these elements being joined together along their longitudinal edges in an alternating arrangement and the elements (5) with a lower crushing tendency forming longitudinal stiffeners.

2. Device according to claim 1, characterised in that the elements (4 and 5) consist of foams of different densities or compactnesses, with or without sealed cells.

3. Device according to any one of claims 1 and 2, characterised in that, to promote the rapidity of the decompression action, the elements (4 and 5) are advantageously equipped with perforations (7) which pass through them transversely at regular intervals or are of open cell foam.

4. Device according to claim 1, characterised in that the body (3) consists of thin strips (8) of stronger consistency, of rubber, synthetic materials or other materials, provided with communication holes (9) and held apart in the rest position by blocks of synthetic foam (10) of weak consistency, these blocks (10) allowing crushing of the body (1) along longitudinal lines and the thin strips (8) forming the longitudinal stiffeners.

5. Device according to claim 1, characterised in that the body (3) consists of thin strips of rectangular section (11) formed in a material of relatively strong consistency and joined together with regular spacing by means of flexible wires (12) locked on each thin strip (11) by means of knots (13) or the like, the assembly of thin strips (11) and flexible wires (12) forming the flexible retractable body and the thin strips (11) being provided at regular intervals with holes (14) and forming longitudinal stiffeners.

6. Device according to clam 1, characterised in that the body (3) consists of bands of rubber of rectangular section (15) provided with communication holes (16) and joined together at regular intervals by means of S-shaped, U-shaped or other resilient spacer elements (17) also produced from rubber, the bands (15) forming longitudinal stiffeners and the spacer elements (17) forming elements of lower compactness.

7. Device according to any one of claims 1 to 6, characterised in that the body (3) is stuck at least by one of its faces, on the corresponding wall of the casing (1) or of the casings (1'), either in the relaxed state or with prior tension.

8. Device according to claim 1, characterised in that the body (3) is formed directly on the walls (18) of the casing (1) which are provided, alternately and at regular intervals, by adhesion or the like, with longitudinal flexible profiles (19) extending perpendicularly to the preferential sense of retraction and forming longitudinal stiffeners.

9. Device according to claim 1, characterised in that the body (3) consists of longitudinal flexible profiles (22) of which the free edges rest on an intermediate sheet (23) which is not stretchable or is slightly stretchable and which are fixed on each wall (21) of the casing (1) by adhesion or the like at regular intervals or alternately, said profiles (22) forming longitudinal stiffeners.

10. Device according to any one of claims 4 to 9, characterised in that the spaces between the longitudinal stiffening elements are filled with light compressible microbeads.

11. Device according to claim 1, characterised in that it has two preferential directions of retraction, that is along a direction perpendicular to the longitudinal sense of the elements (5) constituting the body (3) and in the direction of the longitudinal sense.

12. Device according to claim 1, characterised in that the body (3) comprises elements (24) of higher compactness provided at regular intervals with portions (24') of lower compactness, wherein the compactness of these portions (24') can be higher than or lower than that of the elements (4) of the body (3) as a function of the selected priority direction of retraction.

13. Device according to claim 1, characterised in that it has three directions of retraction, that is along orthogonal axes, the elements (25) of higher compactness themselves having two directions of retraction in their longitudinal sense and in their thickness.

14. Device according to claim 13, characterised in that each element (25) is equipped at regular intervals in the longitudinal sense with portions (25') of lower compactness and in the direction of its thickness with at least one intermediate layer (25") of lower compactness, wherein the compactness of the portions (25') and layer (25") can be the same or different and can be higher or lower than that of the elements (4).

15. Device according to claim 13, characterised in that the third direction of retraction is achieved by providing an attenuation of section of the elements of higher compactness in the region of a longitudinal ridge.

16. Device according to any one of claims 1 to 3 and 11 to 13, characterised in that one or more elements (5') of the body (3) have a triangular section and the elements (4') of lower compactness have complementary sections.

17. Device according to any one of claims 12 to 15, characterised in that the elements (5") of higher compactness and the elements (4") of lower compactness have the form of a tetrahedron and are arranged top to bottom in a casing.

18. Device according to one of claims 1 to 17, characterised in that it is advantageously provided, perpendicularly to its main direction of retraction, at regular intervals, with rigid elements allowing it to be held without deformation.

19. Gripping device, in particular for an "anti-G" garment comprising the device according to any one of claims 1 to 10 essentially consisting of a sealed casing (1), wherein this casing can comprise several independent casings (1') joined together by integrated connecting conduits (6), the casing (1) or the independent casings (1') being provided with at least one coupling (2) to a deflating member or the like, characterised in that it acts by low pressure, in that a flexible retractable body (3, 3') is integrated in the casing or casings (1, 1'), a low pressure in the casing or casings having the effect of retracting the walls thereof, causing gripping of the parts of the body taken in the casing or casings (1, 1') and in that the flexible retractable body (3, 3') advantageously has a preferential direction of retraction perpendicular to the longitudinal axis of the casing (1) or of the casings (1').

**Ansprüche**

1. Vorrichtung, die im wesentlichen aus wenigstens einer dichten Hülle (1, 1') besteht, die mit einer Anschlußdüse (2) an ein Unterdrukkorgan versehen ist und wenigstens eine Vorzugsrichtung zur Reduktion von räumlicher Abmessung aufweist, wobei diese Vorrichtung durch Unterdruck betätigt wird und ein einziehbarer nachgiebiger Körper (3) in die dichte(n) Hülle(n) (1, 1') eingebaut ist und wenigstens eine bevorzugte Einziehrichtung aufweist, wobei ein Unterdruck in der Hülle (1) oder den Hüllen (1') ein Zusammenfallen ihrer Wände senkrecht zur Einziehrichtung bewirkt, dadurch gekennzeichnet, daß der Körper (3) aus Elementen (4 und 5) aus nachgiebigen Materialien mit verschiedenen Druckverformungseigenschaften besteht, diese Elemente aneinander entlang ihrer Längsränder mit abwechselnder Anordnung zusammengefügt sind und die Elemente (5) mit der geringsten Druckverformung Längsversteifungen bilden.

2.  Vorrichtung nach Anspruch 1, dadurch gekennzeichnet, daß die Elemente (4 und 5) aus offen- oder geschlossenzelligen Schäumen mit verschiedenen Dichten oder Kompaktheiten bestehen.

3.  Vorrichtung nach Anspruch 1 oder 2, dadurch gekennzeichnet, daß, um die Dekompressionswirkung zu beschleunigen, die Elemente (4 und 5) zweckmäßig mit Perforationen (7) versehen sind, die sie in Querrichtung in regelmäßigen Intervallen durchsetzen oder aus einem offenzelligen Schaum bestehen.

4.  Vorrichtung nach Anspruch 1, dadurch gekennzeichnet, daß der Körper (3) aus Lamellen (8) von stärkerer Konsistenz aus Kautschuk, Kunststoff od. dgl. besteht, die mit Verbindungslöchern (9) versehen sind und in Ruhestellung durch Klötze (10) aus Kunststoffschaum von schwacher Konsistenz im Abstand voneinander gehalten werden, wobei diese Klötze (10) ein Zusammendrücken des Körpers (1) entlang von Längslinien zulassen und die Lamellen (8) Längsversteifungen bilden.

5.  Vorrichtung nach Anspruch 1, dadurch gekennzeichnet, daß der Körper (3) als Lamellen (11) von rechteckigem Querschnitt gebildet wird, die in einem Material von verhältnismäßig starker Konsistenz ausgebildet sind und miteinander in regelmäßigen Abständen mittels nachgiebiger Fäden (12) verbunden sind, die auf jeder Lamelle (11) mit Knoten (13) od. dgl. befestigt sind, wobei die aus Lamellen (11) und nachgiebigen Fäden (12) bestehende Einheit den einziehbaren nachgiebigen Körper bildet und die Lamellen (11) in regelmäßigen Abständen mit Löchern (14) versehen sind und Längsversteifungen bilden.

6.  Vorrichtung nach Anspruch 1, dadurch gekennzeichnet, daß der Körper (3) aus Kautschukbändern (15) von rechteckigem Querschnitt besteht, die mit Verbindungslöchern (16) versehen und miteinander in regelmäßigen Intervallen mittels elastischer Abstandhalteelemente (17) in S-, U- oder anderer Form verbunden sind, die ebenfalls aus Kautschuk bestehen, wobei die Bänder (15) Längsversteifungen bilden und die Abstandhalteelemente (17) die Elemente mit der geringsten Kompaktheit bilden.

7.  Vorrichtung nach einem der Ansprüche 1 bis 6, dadurch gekennzeichnet, daß der Körper (3) mit wenigstens einer seiner Flächen auf der korrespondierenden Wand der Hülle (1) oder der Hüllen (1') im entspannten Zustand oder mit Vorspannung festgeklebt ist.

8.  Vorrichtung nach Anspruch 1, dadurch gekennzeichnet, daß der Körper (3) direkt auf den Wänden (18) der Hülle (1) ausgebildet ist, die abwechselnd und in regelmäßigen Abständen mittels Kleben oder auf sonstige Weise mit nachgiebigen Längsprofilen (19) versehen sind, die sich senkrecht zur bevorzugten Einziehrichtung erstrecken und Längsversteifungen bilden.

9.  Vorrichtung nach Anspruch 1, dadurch gekennzeichnet, daß der Körper (3) von nachgiebigen Längsprofilen (22) gebildet wird, deren freie Ränder sich auf einem Zwischenstoff (23) abstützen, der nicht oder nur geringfügig dehnbar ist und die auf jeder Wand (21) der Hülle (1) mittels Kleben od.dgl. in regelmäßigen Intervallen und abwechselnd befestigt sind, wobei die genannten Profile (22) Längsversteifungen bilden.

10. Vorrichtung nach einem der Ansprüche 4 bis 9, dadurch gekennzeichnet, daß die Zwischenräume zwischen den Längsversteifungselementen mit leichten zusammendrückbaren Mikrokugeln ausgefüllt sind.

11. Vorrichtung nach Anspruch 1, dadurch gekennzeichnet, daß sie zwei bevorzugte Einziehrichtungen aufweist, nämlich in einer Richtung senkrecht zur Längsrichtung der den Körper (3) bildenden Elemente (5) und in Längsrichtung.

12. Vorrichtung nach Anspruch 1, dadurch gekennzeichnet, daß der Körper (3) Elemente (24) von stärkerer Kompaktheit aufweist, die in regelmäßigen Intervallen mit Abschnitten (24') von geringerer Kompaktheit versehen sind, wobei die Kompaktheit dieser Abschnitte (24') stärker oder geringer als jene der Elemente (4) des Körpers (3) in Abhängigkeit von der gewählten bevorzugten Einziehrichtung sein kann.

13. Vorrichtung nach Anspruch 1, dadurch gekennzeichnet, daß sie drei Einziehrichtungen aufweist, nämlich entlang von orthogonalen Achsen, wobei die Elemente (25) mit der stärksten Kompaktheit selbst zwei Einziehrichtungen in ihrer Längsrichtung und in Richtung ihrer Dikke aufweisen.

14. Vorrichtung nach Anspruch 13, dadurch gekennzeichnet, daß jedes Element (25) in regelmäßigen Intervallen in Längsrichtung mit Abschnitten (25') von geringerer Kompaktheit und in Richtung seiner Dicke mit wenigstens einer Zwischenschicht (25") von geringerer Kompaktheit versehen ist, wobei die Kompaktheit der Abschnitte (25') und der Schicht (25") gleich oder verschieden sein und stärker oder geringer als jene der Elemente (4) sein kann.

15. Vorrichtung nach Anspruch 13, dadurch gekennzeichnet, daß die dritte Einziehrichtung durch Vorsehen einer Verringerung des Querschnittes der Elemente mit der stärksten Kompaktheit auf der Höhe einer Längskante erzielt wird.

16. Vorrichtung nach einem der Ansprüche 1 bis 3 und 11 bis 13, dadurch gekennzeichnet, daß ein oder mehrere Element(e) (5') des Körpers (3) einen dreieckigen Querschnitt aufweist bzw. aufweisen und die Elemente (4') mit geringerer Kompaktheit komplementäre Querschnitte aufweisen.

17. Vorrichtung nach einem der Ansprüche 12 bis 15, dadurch gekennzeichnet, daß die Elemente (5") mit der stärksten Kompaktheit und die Elemente (4") mit geringerer Kompaktheit Tetraederform besitzen und in einer Hülle Kopf bei Fuß angeordnet sind.

18. Vorrichtung nach einem der Ansprüche 1 bis 17, dadurch gekennzeichnet, daß sie zweckmäßig senkrecht zu ihrer Haupteinziehrichtung in regelmäßigen Intervallen mit starren Elementen versehen ist, die eine Halterung ohne Verformung ermöglichen.

19. Einspannvorrichtung, insbesondere für ein "anti-G"-Bekleidungsstück, die die Vorrichtung nach einem der Ansprüche 1 bis 10 umfaßt und im wesentlichen aus wenigstens einer dichten Hülle (1) besteht, wobei diese Hülle mehrere unabhängige Hüllen (1') umfassen kann, die untereinander durch integrierte Verbindungsleitungen (6) verbunden sind, wobei die Hülle (1) oder die unabhängigen Hüllen (1') mit wenigstens einem Anschluß (2) an ein Dekompressionsorgan od. dgl. verbunden sind, dadurch gekennzeichnet, daß sie durch Unterdruck wirkt, daß ein nachgiebiger einziehbarer Körper (3, 3') in die Hülle(n) (1, 1') integriert ist, daß ein Unterdruck in der Hülle bzw. den Hüllen ein Einziehen ihrer Wände bewirkt und ein Einspannen der Teile des Körpers bewirkt, die in der Hülle oder den Hüllen (1, 1') enthalten sind und daß der nachgiebige einziehbare Körper (3, 3') zweckmäßig eine bevorzugte Einziehrichtung senkrecht zur Längsachse der Hülle (1) oder der Hüllen (1') aufweist.

Fig.1

Fig.2

Fig.3

Fig.4

Fig.5

3

17

16

15

Fig.6

1

20

18

19

Fig.7

1

22

21

23

21

Fig.8

Fig.9

Fig.10

Fig.11

# Fig.12